# EUROPÄISCHE PATENTSCHRIFT

(11) **EP 1 575 729 B1**
(45) Veröffentlichungstag und Bekanntmachung des Hinweises auf die Patenterteilung: **05.11.2008**
(21) Anmeldenummer: 03789275.9
(22) Anmeldetag: 15.12.2003
(51) Int. Cl.: B23D 25/08, B23D 35/00

(54) **KURBELSCHERE MIT ZWEI MESSERPAAREN ZUM SCHNEIDEN VON WALZBAND**
CRANK SCISSORS HAVING TWO PAIRS OF BLADES FOR CUTTING ROLLING STRIPS
CISAILLE A BIELLE COMPRENANT DEUX PAIRES DE LAMES ADAPTEE POUR DECOUPER DES FEUILLARDS

(30) Priorität: 17.12.2002 DE 10258887
(43) Veröffentlichungstag der Anmeldung: 21.09.2005
(73) Patentinhaber: SMS Demag Aktiengesellschaft, 40237 Düsseldorf (DE)
(72) Erfinder: HEITZE, Gerhard, 57250 Netphen (DE); GREBE, Ulrich, 57482 Wenden (DE); BÄUMER, Klaus, 57223 Kreuztal (DE)
(74) Vertreter: Klüppel, Walter
(86) Internationale Anmeldenummer: PCT/EP2003/014225
(87) Internationale Veröffentlichungsnummer: WO 2004/054745

(56) Entgegenhaltungen:
- EP-A- 0 075 448

## Beschreibung

Die Erfindung betrifft eine Kurbelschere, insbesondere zum Schneiden von Walzband mit je zwei an Messerträgern befestigbaren Messerpaaren, wobei die Messerträger in einer vertikalen Ebene (x-x) gegenüberliegend in einem Paar Exzenter-Antriebswellen gelagert sind und an Drehmoment-Stützhebeln in Doppelgelenkanordnungen im Zusammenwirken mit daran angreifenden Hydraulik-Stellorganen schwenkbar gehalten sind und das obere Messerpaar in einer bogenförmigen Ausnehmung des oberen Messerträgers an Anlagenflächen angeordnet ist,

Vielfach eingesetzte Kurbelscheren haben den Nachteil, dass sie nur ein Messerpaar besitzen, üblicherweise mit einem konvexen Schliff.
Für den gleichen Einsatzfall eingesetzte Trommelscheren sind beim Stand der Technik bekannt, welche zwei Messerpaare mit je einem konvexen und einem konkaven Schliff besitzen. Dabei wird für eine bessere Bandenden-Beeinflussung beispielsweise der Bandanfang mit einem konvexen, und das Bandende mit einem konkaven Messerschliff geschnitten.

Das Dokument EP 0 075 448 beschreibt eine Kurbelschere gemäß des Oberbegriffs des Anspruchs 1, mit je zwei Messerpaaren, die in einer vertikalen Ebene gegenüberliegend in je einem Paar Exzenter-Antriebswellen gelagert und an Drehmoment-Stützhebeln in Doppelgelenkanordnungen mit wenigstens einem daran angreifenden Hydraulik-Stellorgan schwenkbar gehalten sind.

Die bekannte Schere zum Teilen von Metallbändern besitzt zwei Messerträger, die relativ zueinander schwenkbar sind, so dass die Messer durch ihre beiden Träger abwechselnd in Schneidpositionen mit dem Metallband bringbar sind.
Jeder Schneidenträger hat eine Aufnahme für zwei Messer und ist zwischen zwei Positionen bewegbar, in welchen die entsprechenden Messer jeweils in eine Wirkstellung bringbar sind.
Mit dieser Anordnung kann jeweils ein Paar der Messer geschärft werden, während das andere Paar zum Schnitt gebracht wird und danach beide Paare ggf. gegeneinander ausgewechselt werden können.

Von Nachteil bei der bekannten Kurbelschere mit zwei Messerpaaren ist die zwischen den Messerpaaren einnehmbare Durchlauf-Position mit äußerst geringer Weite, die beispielsweise beim Durchlauf eines aufgebogenen Bandanfanges zur Kollision mit der Schere führen kann. Ein solcher Störfall geht zu Lasten von Arbeitszeit und Material.
Eine weitere Schwierigkeit ergibt sich bei der bekannten Schere dadurch, dass die Messer nicht mit der bewährten Messerabweiserklemmung in den Messerträgern befestigbar sind.

Ausgehend vom vorgenannten Stand der Technik liegt der Erfindung die Aufgabe zugrunde, eine Bauart der Kurbelschere mit zwei Messerpaaren anzugeben, welche die vorgenannten Schwierigkeiten und Nachteile vermeidet und insbesondere eine wesentlich weitere Durchlauf-Position für das Walzband ermöglicht, und ebenso den Einsatz der bewährten Messerabweiserklemmung problemlos zulässt.

Die Aufgabe wird durch eine Kurbelschere mit den Merkmalen des Anspruchs 1 gelöst.

Eine Ausgestaltung der Erfindung sieht dabei vor, dass in einer Spreiz-Position der Drehmoment-Stützhebel von annähernd 90° und bei kürzester Distanz der Exzenterwellen und einer Laufrichtung des Walzbandes gegen die Stützhebel eine Position des Messerpaares zum Schopf-Schnitt am Bandanfang erreicht ist, bei der das Hydraulik-Stellorgan am oberen Stützhebel der Doppelgelenkanordnung voll ausgefahren und das Hydraulik-Stellorgan am unteren Stützhebel der Doppelgelenkanordnung voll eingefahren ist.

Und weiterhin sieht eine Ausgestaltung vor, dass in einer annähernd horizontalen Parallelposition der Drehmoment-Stützhebel entgegen der Laufrichtung des Walzbandes und bei kürzester Distanz der Exzenterwellen bei annähernd geradlinig gestreckter oberer und unterer Doppelgelenkanordnung eine Position des hinteren Messerpaares zum Schnitt des Bandendes erreicht ist, bei der das Hydraulik-Stellorgan am oberen Stützhebel der Doppelgelenkanordnung voll eingefahren und das Stellorgan am unteren Stützhebel der Doppelgelenkanordnung voll ausgefahren ist.

Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:
- Fig. 1: die Kurbelschere mit zwei Messerträgern und daran befestigten Messern in Seitenansicht in einer Funktionsphase beim Schopfen des vorderen Walzbandendes;
- Fig. 2: die Kurbelschere in extrem weit geöffneter Position für einen Durchlauf des Walzbandes;
- Fig. 3: die Kurbelschere, ebenfalls in Seitenansicht, in einer Position zum Schopfen des hinteren Walzbandendes;
- Fig. 4: die Kurbelschere in geöffneter Position für einen erneuten Durchlauf des Walzbandes im Anschluss an das Schopfen des hinteren Bandendes.

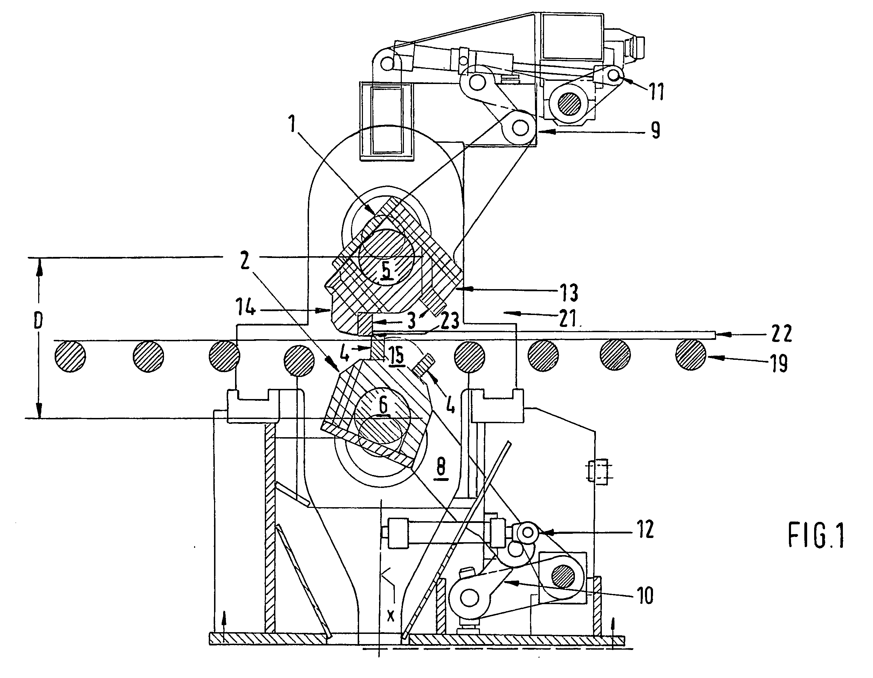

Fig.1 zeigt die Kurbelschere mit je zwei an Messerträgern 1, 2 befestigbaren Messerpaaren 3, 4, wobei die Messerträger 1, 2 in einer vertikalen Ebene (x-x) gegenüberliegend in einem Paar Exzenter-Antriebswellen 5, 6 gelagert und an Drehmoment-Stützhebeln 7, 8 in Doppelgelenkanordnungen 9, 10 schwenkbar gehalten sind und mit daran angreifenden Hydraulik-Stellorganen 11, 12 zusammenwirken.

Die Messerträger 1, 2 bilden an annähernd radialen Vorsprüngen 13 bis 15 achsparallele Anlageflächenpaare 16 bis 18 für die Messerpaare 3, 4 aus, von welchen das obere Messerpaar 3 an inneren, gegeneinander gerichteten Anlageflächen 16, 17 einer bogenförmigen Ausnehmung 20 des oberen Messerträgers 1, und das untere Messerpaar 4 an einem der Ausnehmung 20 entgegen gerichteten relativ schmäleren Vorsprung 15 an dessen äußeren Anlageflächen 18 angeordnet sind.

Die Kurbelschere hat in einer Spreiz-Position der Drehmoment-Stützhebel 7, 8 von annähernd 90° und bei kürzester Distanz D der Exzenterwellen 5, 6 und einer Laufrichtung 21 des Walzbandes 22 eine Position des Messerpaares 3 zum Schopfschnitt am Bandanfang 23 erreicht. In dieser Position ist das Hydraulik-Stellorgan 11 am oberen Stützhebel 7 der Doppelgelenkanordnung 9 zu dessen Spreizung voll ausgefahren, und das Stellorgan 12 ist am unteren Stützhebel 8 der Doppelgelenkanordnung 10 voll eingefahren.
Mit der Ziffer 19 ist der Rollgang zum Transport des Walzbandes 22 gekennzeichnet.

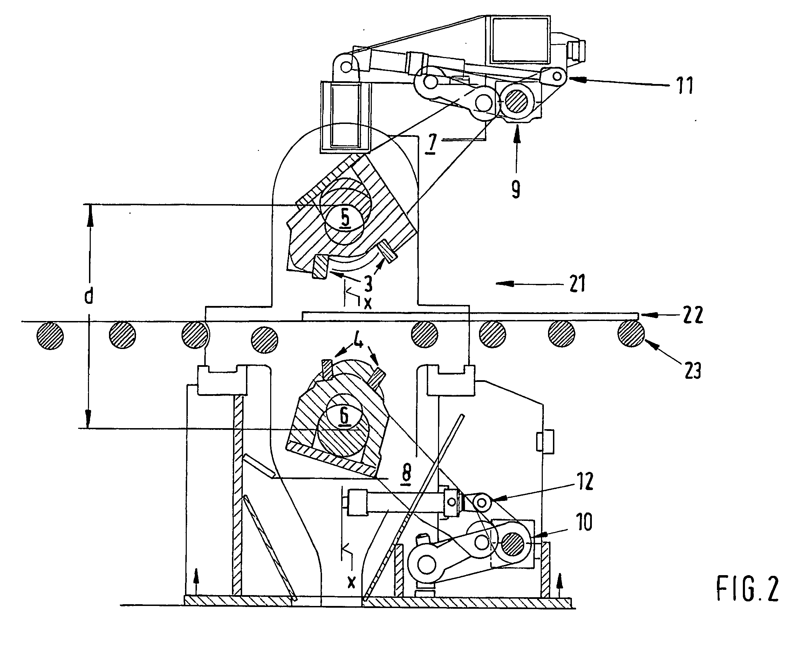

Die Fig. 2 zeigt in einer extremen Spreiz-Position der Drehmoment-Stützhebel 7, 8 von annähernd 90° bei weitester Distanz d der Exzenterwellen 5, 6 und in einer Laufrichtung 21 des Walzbandes 22 gegen die Stützhebel 7, 8 eine weite Durchlauf-Position der Kurbelschere für das Walzband, wobei das Stellorgan 12 am unteren Stützhebel 8 der Doppelgelenkanordnung 10 zu dessen Faltung voll eingefahren ist und das Stellorgan 11 am oberen Stützhebel 7 der Doppelgelenkanordnung 9 voll ausgefahren ist.

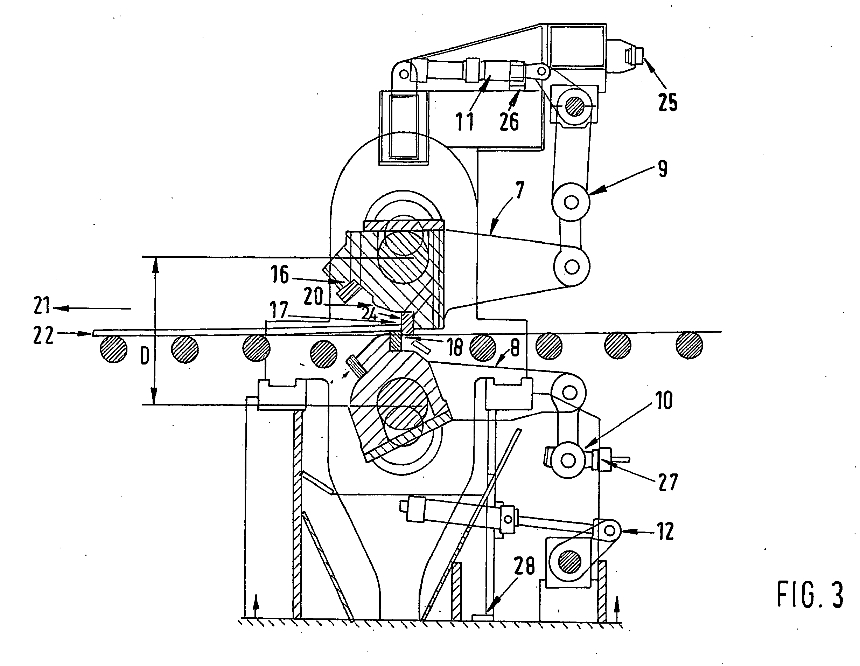

Fig. 3 zeigt die Kurbelschere mit einer annähernd horizontalen Parallelposition der Drehmoment-Stützhebel 7, 8 entgegen der Laufrichtung 21 des Walzbandes 22 und bei kürzester Distanz D der Exzenterwellen 5, 6 bei annähernd geradlinig gestreckter oberer 9 und unterer 10 Doppelgelenkanordnung. Hier ist eine Position des hinteren Messerpaares zum Schnitt des Bandendes 24 erreicht. Dabei ist das Hydraulik-Stellorgan 11 am oberen Stützhebel 7 der Doppelgelenkanordnung 9 voll eingefahren und das Stellorgan 12 ist am unteren Stützhebel 8 der Doppelgelenkanordnung 10 ausgefahren.

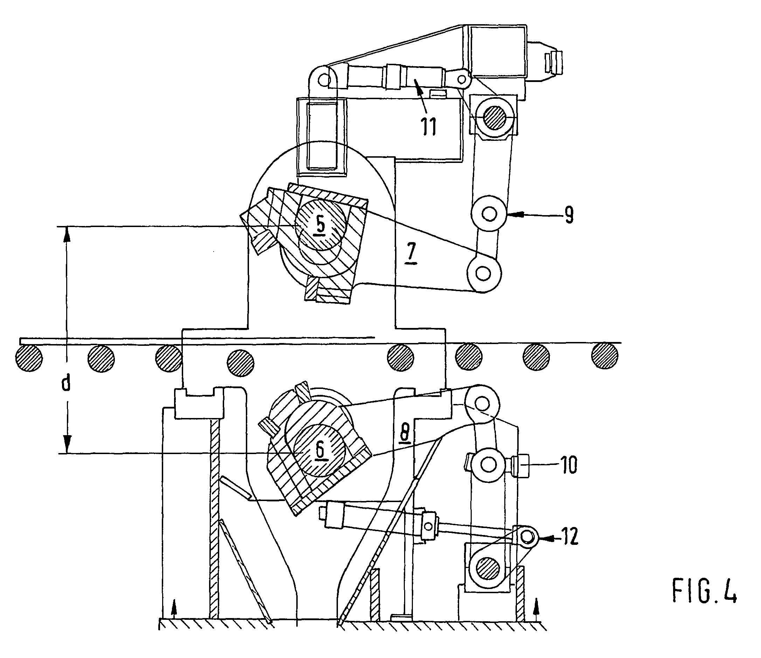

Und schließlich zeigt die Figur 4, bei weitester Distanz d der Exzenterwellen 5, 6 eine Durchlauf-Position durch die Schere. Hierbei ist das in einer abwärts geneigten Position des oberen Stützhebels 7 obere Hydraulik-Stellorgan 11 voll eingefahren, während das untere Stellorgan 12 der Doppelgelenkanordnungen 9, 10 voll eingefahren ist.

### Bezugszeichenliste

- 1.: Messerträger
- 2.: Messerträger
- 3.: Messer
- 4.: Messer
- 5.: Exzenter-Antriebswelle
- 6.: Exzenter-Antriebswelle
- 7.: Drehmoment-Stützhebel
- 8.: Drehmoment-Stützhebel
- 9.: Doppelgelenkanordnung
- 10.: Doppelgelenkanordnung
- 11.: Hydraulik-Stellorgan
- 12.: Hydraulik-Stellorgan
- 13.: Vorsprung
- 14.: Vorsprung
- 15.: Vorsprung
- 16.: innere Anlagefläche
- 17.: innere Anlagefläche
- 18.: äußere Anlagefläche
- 19.: Rollgang
- 20.: bogenförmige Ausnehmung
- 21.: Laufrichtung
- 22.: Band/Walzband
- 23.: Bandanfang
- 24.: Bandende
- 25.: Anschlag
- 26.: Anschlag
- 27.: Anschlag
- 28.: Anschlag

## Patentansprüche

1. Kurbelschere, insbesondere zum Schneiden von Walzband (22) mit je zwei an Messerträgern (1, 2) befestigbaren Messerpaaren (3, 4), wobei die Messerträger (1, 2) in einer vertikalen Ebene (x-x) gegenüberliegend in einem Paar Exzenter-Antriebswellen (5, 6) gelagert sind und an Drehmoment-Stützhebeln (7, 8) in Doppelgelenkanordnungen (9, 10) im Zusammenwirken mit daran angreifenden Hydraulik-Stellorganen (11, 12) schwenkbar gehalten sind,
wobei die Messerträger (1, 2) an annähernd radialen Vorsprüngen (13 - 15) achsparallele Anlageflächenpaare (16 - 18) für die Messerpaare (3, 4) ausbilden, von welchen das obere Messerpaar (3) an inneren, gegeneinander gerichteten Anlageflächen (16, 17) angeordnet ist,
das obere Messerpaar (3) in einer bogenförmigen Ausnehmung (20) des oberen Messerträgers (1) an den Anlagenflächen (16, 17) angeordnet ist,
dass das untere Messerpaar (4) an den äußeren Anlagenflächen (18) eines der Ausnehmung (20) entgegen gerichteten Vorsprunges (15) angeordnet ist,
dass der der Ausnehmung (20) entgegen gerichtete Vorsprung (15) relativ schmaler ist, **dadurch gekennzeichnet**
**dass** der Vorsprung (15) einteilig mit dem unteren Messerträger (2) ausgebildet ist.

2. Kurbelschere nach Anspruch 1,
**dadurch gekennzeichnet,**
**dass** in einer Spreiz-Position der Drehmoment-Stützhebel (7, 8) von annähernd 90° und bei kürzester Distanz (D) der Exzenterwellen (5, 6) und einer Laufrichtung (21) des Walzbandes (22) gegen die Stützhebel (7, 8) eine Position des Messerpaares (3) zum Schopf-Schnitt am Bandanfang erreicht ist, bei der das Hydraulik-Stellorgan (11) am oberen Stützhebel (7) der Doppelgelenkanordnung (9) voll ausgefahren und das Stellorgan (12) am unteren Stützhebel (8) der Doppelgelenkanordnung (10) voll eingefahren ist (Fig.1).

3. Kurbelschere nach Anspruch 1,
**dadurch gekennzeichnet,**
**dass** in einer Spreiz-Position der Drehmoment-Stützhebel (7, 8) von annähernd 90° und bei weitester Distanz (d) der Exzenterwellen (5, 6) und einer Laufrichtung (21) des Walzbandes (22) gegen die Stützhebel (7, 8) eine Durchlauf-Position der Kurbelschere erreicht ist, bei der das Stellorgan (12) am unteren Stützhebel (8) der Doppelgelenkanordnung (10) voll eingefahren und das Stellorgan (11) am oberen Stützhebel (7) der Doppelgelenkanordnung (9) voll ausgefahren ist.

4. Kurbelschere nach Anspruch 1,
**dadurch gekennzeichnet,**
**dass** in einer annähernd horizontalen Parallelposition der Drehmoment-Stützhebel (7, 8) entgegen der Laufrichtung (21) des Walzbandes (22) und bei kürzester Distanz (D) der Exzenterwellen (5, 6) bei annähernd geradlinig gestreckter oberer (9) und unterer (10) Doppelgelenkanordnung eine Position des hinteren Messerpaares zum Schnitt des Bandendes (24) erreicht ist, bei der das Hydraulik-Stellorgan (11) am oberen Stützhebel (7) der Doppelgelenkanordnung voll eingefahren und das Stellorgan (12) am unteren Stützhebel (8) der Doppelgelenkanordnung (10) voll ausgefahren ist.

5. Kurbelschere nach Anspruch 1,
**dadurch gekennzeichnet,**
**dass** in einer gegen das Walzband (22) abwärts geneigten Position des oberen Stützhebels (7) bei eingefahrenem oberen Hydraulik-Stellorgan (11) und in einer gegen das Walzband (22) aufwärts geneigten Position des unteren Stützhebels (8) bei voll ausgefahrenem unteren Stellorgan (12) der Doppelgelenkanordnungen (9, 10) und bei weitester Distanz (d) der Exzenterwellen (5, 6) die Durchlauf-Position durch die Schere erreicht ist.

## Claims

1. Guillotine shears, particularly for cutting rolled strip (22), with two knife pairs (3, 4) respectively fastenable to knife carriers (1, 2), wherein the knife carriers (1, 2) are mounted in a pair of eccentric drive shafts (5, 6) to be opposite in a vertical plane (x-x) and are pivotably held at torque support levers (7, 8) in double-joint arrangements (9, 10) in cooperation with hydraulic setting elements (11, 12) engaging thereat, wherein the knife carriers (1, 2) form, at approximately radial projections (13 to 15), axially parallel support surface pairs (16 to 18) for the knife pairs (3, 4), of which the upper knife pair (3) is arranged at inner, oppositely directed support surfaces (16, 17), the upper knife pair (3) is arranged in a curved recess (20) of the upper knife carrier (1) at the support surfaces (16, 17), the lower knife pair (4) is arranged at the outer support surfaces (18) of a projection (15) directed oppositely to the recess (20), and the projection (15) directed oppositely to the recess (20) is relatively narrower, **characterised in that** the projection (15) is formed integrally with the lower knife carrier (2).

2. Guillotine shears according to claim 1, **characterised in that** in a spread position of the torque support levers (7, 8) of approximately 90° and with shortest spacing (D) of the eccentric shafts (5, 6) and a running direction (21) of the rolled strip (22) towards the support levers (7, 8) a position of the knife pair (3) relative to the cropping cut at the strip start is achieved in which the hydraulic setting element (11) at the upper support lever (7) of the double-joint arrangement (9) is fully moved out and the setting element (12) at the lower support lever (8) of the double-joint arrangement (10) is fully moved in (Fig. 1).

3. Guillotine shears according to claim 1, **characterised in that** in a spread position of the torque support levers (7, 8) of approximately 90° and with greatest spacing (d) of the eccentric shafts (5, 6) and a running direction (21) of the rolled strip (22) towards the support levers (7, 8) a transit position of guillotine shears is achieved in which the setting element (12) at the lower support leer (8) of the double-joint arrangement (10) is fully moved in and the setting element (11) at the upper support lever (7) of the double-joint arrangement (9) is fully moved out.

4. Guillotine shears according to claim 1, **characterised in that** in an approximately horizontal, parallel position of the torque support levers (7, 8) against the running direction (21) of the rolled strip (22) and with shortest spacing (D) of the eccentric shafts (5, 6) with approximately rectilinearly extended upper double-joint arrangement (9) and lower double-joint arrangement (10) a position of the rearward knife pair for cutting of the strip end (24) is achieved in which the hydraulic setting element (11) at the upper support lever (7) of the double-joint arrangement is fully moved in and the setting element (12) at the lower support lever (8) of the double-joint arrangement (10) is fully moved out.

5. Guillotine shears according to claim 1, **characterised in that** the transit position through the shears is reached in a position, which is inclined downwardly towards the rolled strip (22), of the upper support lever (7) with moved-in upper hydraulic setting element (11) and in a position, which is inclined upwardly towards the rolled strip (22), of the lower support lever (6) with fully moved-out lower setting element (12) of the double-joint arrangements (9, 10) and with greatest spacing (d) of the eccentric shafts (5, 6).

## Revendications

1. Cisaille à bielle, en particulier pour couper une bande laminée (22), comprenant deux paires de couteaux respectives (3, 4) susceptibles d'être fixées sur des porte-couteaux (1, 2), dans laquelle les porte-couteaux (1, 2) sont montés opposés l'un à l'autre dans un plan vertical (x-x) dans une paire d'arbres d'entraînement excentriques (5, 6), et sont maintenus avec possibilité de basculement sur des leviers d'encaissement de couple de rotation (7, 8), dans des agencements à double articulation (9, 10) en coopération avec des organes de positionnement hydrauliques (11, 12) qui attaquent ces derniers, dans laquelle les porte-couteaux (1, 2) constituent, sur des saillies (13-15) approximativement radiales, des paires de surfaces d'appui (16-18) parallèles à l'axe pour les paires de couteaux (3, 4), parmi lesquelles la paire de couteaux supérieure (3) est agencée sur des surfaces d'appui intérieures (16, 17) orientées à l'opposé l'une de l'autre,
la paire de couteaux supérieure (3) est agencée dans un évidement (20) de forme arquée du porte-couteau (1) supérieur sur les surfaces d'appui (16, 17),
la paire de couteaux inférieure (4) est agencée sur les surfaces d'appui (18) extérieures d'une saillie (15) dirigée à l'opposé de l'évidement (20), la saillie (15) dirigée à l'opposé de l'évidement (20) est relativement plus étroite,
**caractérisée en ce que** la saillie (15) est réalisée d'une seule pièce avec le porte-couteau (2) inférieur.

2. Cisaille à bielle selon la revendication 1,
**caractérisée en ce que**, dans une position d'écartement des leviers d'encaissement de couple de rotation (7, 8) à approximativement 90°, pour la plus courte distance (D) des arbres excentriques (5, 6) et pour une direction de déplacement (21) de la bande laminée (22) contre les leviers d'encaissement (7, 8), une position de la paire de couteaux (3) est atteinte au début de la bande pour effectuer une coupe d'amorce, dans laquelle l'organe de positionnement hydraulique (11) au niveau du levier d'encaissement supérieur (7) de l'agencement à double articulation (9) est totalement déployé, et l'organe de positionnement (12) au niveau du levier d'encaissement inférieur (8) de l'agencement à double articulation (10) est totalement rétracté (figure 1).

3. Cisaille à bielle selon la revendication 1,
**caractérisée en ce que**, dans une position d'écartement des leviers d'encaissement de couple de rotation (7, 8) à approximativement 90°, pour la plus courte distance (D) des arbres excentriques (5, 6) et pour une direction de déplacement (21) de la bande laminée (22) contre les leviers d'encaissement (7, 8), une position de passage de la cisaille à bielle est atteinte dans laquelle l'organe de positionnement (12) au niveau du levier d'encaissement inférieur (8) de l'agencement à double articulation (10) est totalement rétracté, et l'organe de positionnement (11) au niveau du levier d'encaissement supérieur (7) de l'agencement à double articulation (9) est totalement déployé.

4. Cisaille à bielle selon la revendication 1,
**caractérisée** à en ce que, dans une position parallèle approximativement horizontale des leviers d'encaissement de couple de rotation (7, 8) en sens opposé à la direction de déplacement (21) de la bande laminée (22) et pour la plus courte distance (D) des arbres excentriques (5, 6) alors que les agencements à double articulation supérieur (9) et inférieur (10) sont en extension approximativement en ligne droite, une position de la paire de couteaux postérieurs pour une coupe de l'extrémité de bande (24) est atteinte, dans laquelle l'organe de positionnement hydraulique (11) au niveau du levier d'encaissement supérieur (7) de l'agencement à double articulation est totalement rétracté, et l'organe de positionnement (12) au niveau du levier d'encaissement inférieur (8) de l'agencement à double articulation (10) est totalement déployé.

5. Cisaille à bielle selon la revendication 1,
**caractérisée en ce que**, dans une position inclinée vers le bas vers la bande laminée (22) du levier d'encaissement supérieur (7), alors que l'organe de positionnement hydraulique supérieur (11) est rétracté, et dans une position inclinée vers le haut vers la bande laminée (22) du levier d'encaissement inférieur (8) alors que l'organe de positionnement inférieur (12) des agencements à double articulation (9, 10) est totalement déployé, et pour la plus grande distance (d) des arbres excentriques (5, 6), la position de passage à travers la cisaille est atteinte.
